(19) Europäisches Patentamt
European Patent Office
Office européen des brevets

(11) EP 2 938 965 B1

(12) FASCICULE DE BREVET EUROPEEN

(45) Date de publication et mention de la délivrance du brevet:
**15.02.2017 Bulletin 2017/07**

(51) Int Cl.:
***G01C 21/16*** *(2006.01)* ***G01C 25/00*** *(2006.01)*

(21) Numéro de dépôt: **13815766.4**

(22) Date de dépôt: **23.12.2013**

(86) Numéro de dépôt international:
**PCT/EP2013/077953**

(87) Numéro de publication internationale:
**WO 2014/102261 (03.07.2014 Gazette 2014/27)**

(54) **PROCEDE DE COMPARAISON DE DEUX CENTRALES INERTIELLES SOLIDAIRES D'UN MEME PORTEUR**

VERFAHREN ZUM VERGLEICH ZWEIER INERTER EINHEITEN MIT DEMSELBEN TRÄGER

METHOD FOR COMPARING TWO INERTIAL UNITS INTEGRAL WITH A SAME CARRIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.12.2012 FR 1203593**

(43) Date de publication de la demande:
**04.11.2015 Bulletin 2015/45**

(73) Titulaire: **Safran Electronics & Defense
92100 Boulogne-Billancourt (FR)**

(72) Inventeurs:
• **LIGNON, Christian
  F-92100 Boulogne-Billancourt (FR)**
• **GENDRE, Nicolas
  F-92100 Boulogne-Billancourt (FR)**

(74) Mandataire: **Lavialle, Bruno François Stéphane et al
Cabinet Boettcher
16, rue Médéric
75017 Paris (FR)**

(56) Documents cités:
**EP-A1- 2 192 385    US-B1- 7 066 004**

## Description

La présente invention concerne le transfert d'attitude (c'est-à-dire l'orientation du porteur dans un repère inertiel) d'une centrale inertielle vers une autre centrale inertielle.

Une centrale inertielle comporte des capteurs accélérométriques et des capteurs angulaires de type gyroscope ou gyromètre qui sont montés sur les axes d'un repère de mesure propre à la centrale inertielle. Les capteurs sont reliés à l'unité de traitement agencé pour traiter les signaux provenant des capteurs de manière à fournir des données de navigation, à savoir une attitude, une vitesse et une position du véhicule porteur auquel la centrale inertielle est fixée.

Il arrive qu'un même véhicule embarque deux centrales inertielles ayant des performances différentes comme par exemple une centrale inertielle précise à court terme mais inutilisable à long terme et une centrale inertielle précise à long terme mais présentant des erreurs cycliques importantes à court et moyen terme. Une bonne précision des données de navigation à court, moyen et long termes est obtenue en comparant des données de navigation, généralement la vitesse ou la position, fournies par les deux centrales inertielles.

Par exemple le document EP 2 192 385 A1 décrit un tel procédé de comparaison de centrales inertielles.

Cette comparaison est réalisée au moyen d'un filtre de Kalman pour déterminer un modèle d'erreur. Il est ainsi possible d'estimer et corriger les erreurs des capteurs accélérométriques et des capteurs angulaires. Toutefois, la comparaison est réalisé sur une donnée résultant d'un calcul de navigation qui est influencé également par des erreurs liées à l'unité de traitement élaborant des positions ou des vitesses. En outre, l'utilisation d'une donnée issue de l'unité de traitement rend délicat tout filtrage qui permettrait de faciliter la comparaison ou d'augmenter la fiabilité de celle-ci. Un but de l'invention est de fournir un moyen pour estimer l'orientation d'une centrale inertielle à partir des mesures d'une autre centrale inertielle.

A cet effet, on prévoit, selon l'invention, un procédé de comparaison de deux centrales inertielles selon la revendication 1 annexée.

Ainsi, le procédé de l'invention effectue une comparaison des repères des centrales inertielles, ces repères étant obtenus à partir de la force spécifique déterminée par les capteurs accélérométriques et les rotations mesurées par les capteurs angulaires. Or, compte tenu de l'invariance de la force spécifique en un point dans un repère inertiel quelconque (c'est-à-dire que les deux centrales inertielles mesurent la même grandeur physique), il est possible de filtrer cette grandeur en vue d'améliorer la fiabilité de la comparaison.

Selon des caractéristiques particulières :

- la reconstitution de la force spécifique dans un repère inertiel est réalisée en calculant un signal correspondant au produit de la force spécifique mesurée dans le repère capteurs et d'une matrice de rotation issue de l'intégration de la mesure des incréments de rotations, ce signal subissant ensuite un filtrage passe-bas et un sous-échantillonnage ;
- la durée prédéterminée est sensiblement égale à la période d'excitation d'erreur de celle des centrales inertielles présentant une fiabilité la plus basse à court terme ;
- l'une des centrales inertielles étant une centrale inertielle à retournement, la durée est au moins égale à la durée d'un cycle complet de retournements ;
- la durée est au moins de l'ordre de quelques minutes ;
- la comparaison est effectuée en calculant une matrice de rotation entre les deux repères inertiels.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :

- les figures 1 à 12 sont des schémas blocs montrant les différentes étapes du procédé selon un mode de mise en oeuvre préféré de l'invention ;
- la figure 13 est une vue schématique d'un porteur équipé de deux centrales inertielles permettant la mise en oeuvre du procédé de l'invention.

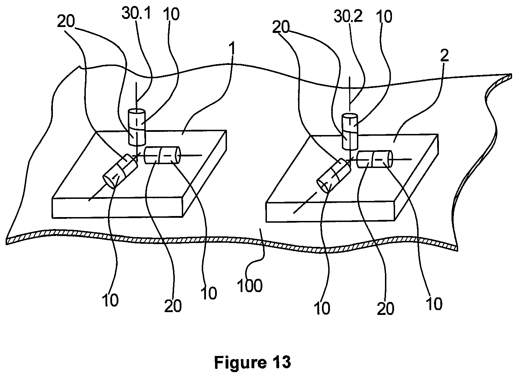

A la figure 13 est représenté un porteur 100 tel qu'un avion ou un navire. Deux centrales inertielles 1, 2 (ou centrale inertielle pour unité de mesure inertielle) sont solidaires du porteur 100 en des positions écartées l'une de l'autre. Chaque centrale inertielle 1, 2 comporte trois capteurs de mesure angulaire, ici des gyroscopes 10, et trois capteurs accélérométriques 20 montés selon les axes d'un repère de mesure 30.1, 30.2 propre à chaque centrale inertielle 1, 2.

Les centrales inertielles 1 et 2 ont des performances différentes : par exemple la centrale inertielle 1 présente de meilleures performances à court et moyen termes que la centrale inertielle 2 tandis que la centrale inertielle 2 présente de meilleures performances à long terme que la centrale inertielle 1. Les centrales inertielles 1, 2 peuvent utiliser la même technologie ou des technologies différentes. Les centrales inertielles peuvent ainsi comprendre des capteurs à résonateurs vibrants, des capteurs à fibres optiques... Les centrales inertielles peuvent être fixes (type « strap down ») ou portée par un châssis de stabilisation ou un châssis articulé pour assurer des retournements successifs de la centrales inertielle.

Les centrales inertielles 1, 2 sont reliées à une unité de navigation 40 programmée pour mettre en oeuvre le procédé de l'invention dont le fonctionnement est décrit ci-après.

Le procédé comprend les étapes de :

- sur une durée prédéterminée, déterminer une force spécifique et des rotations respectivement avec les capteurs accélérométriques et les capteurs angulaires de chaque centrale inertielle,
- corriger un effet de bras de levier pour ramener les repères à une même origine,
- reconstituer un repère inertiel de chaque centrale inertielle à partir de la force spécifique et des rotations ainsi mesurées,
- comparer les repères inertiels pour déterminer un écart entre eux.

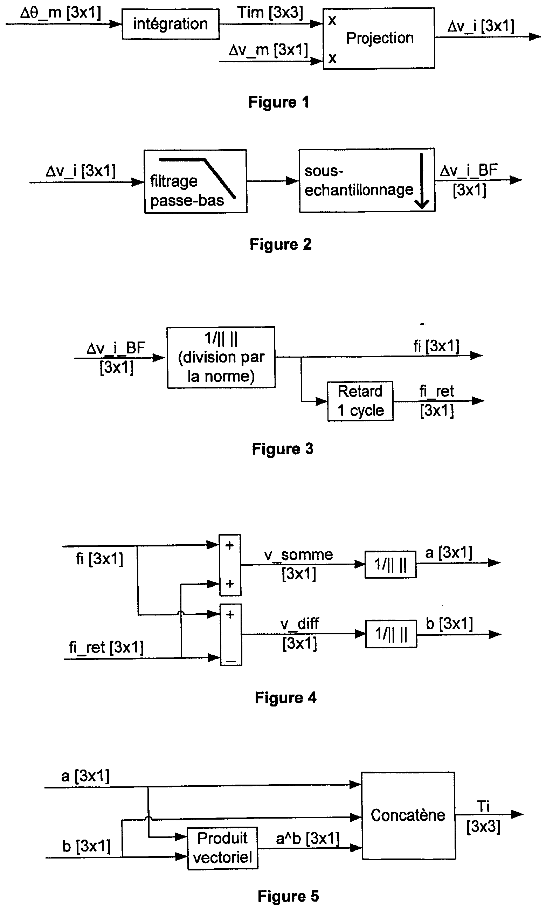

Plus précisément, une durée caractéristique est prédéterminée en premier lieu. Cette durée est de préférence égale à la période d'excitation des erreurs de la centrale inertielle la moins fiable à court terme, soit ici la centrale inertielle 2. Typiquement, pour une centrale inertielle à retournement, on utilise la durée du cycle complet de retournements. La durée de cycle doit être au moins de l'ordre de la demi-heure, pour éviter une division par zéro ou une trop grande vulnérabilité au bruit sur les opérations de la figure 4.

Le signal considéré est un incrément de vitesse $\Delta v\_i$ dans le repère inertiel de calcul de chaque centrale inertielle. Les incréments de vitesse $\Delta v\_i$ (qui concernent les trois axes du repère inertiel de calcul et sont donc modélisables numériquement sous la forme d'une matrice [3x1] comme indiqué sur les figures pour chaque grandeur qui peut l'être) sont obtenus en multipliant les incréments de vitesse $\Delta v\_m$ (qui sont fournis par les accéléromètres de chaque centrale inertielle) par la matrice de rotation Tim (matrice [3x3]) obtenue en intégrant sur la durée caractéristique les incréments angulaires $\Delta \theta\_m$ des gyroscopes à chaque instant (figure 1).

Les incréments de vitesse $\Delta v\_i$ subissent un filtrage passe-bas, puis sont sous-échantillonnés pour obtenir des incréments de vitesse basse fréquence $\Delta v\_i\_BF$ (figure 2). La période de sous-échantillonnage est par exemple comprise entre 3 et 30 secondes. Le filtre passe-bas peut être de différents types, mais doit assurer le respect du critère de Shannon pour le sous-échantillonnage. On notera que ce filtrage est rendu possible par l'invariance de la force spécifique en un point dans un repère inertiel quelconque. En outre, les incréments $\Delta v\_i$ en question étant des signaux à trois composantes, le filtrage se fait indépendamment sur les trois voies.

Les incréments de vitesse basse fréquence $\Delta v\_i\_BF$ sont ensuite normés. Les incréments normés rentrent dans une file de mémoire, ce qui permet pour l'étape suivante d'utiliser simultanément le dernier incrément normé produit fi, et un incrément normé retardé d'exactement un cycle fi_ret (figure 3). Les incréments normés fi et fi_ret sont modélisables numériquement sous forme de matrice [3x1]. Les incréments normés fi et fi_ret sont représentatifs de la force spécifique et sont différents l'un de l'autre pour une même centrale inertielle du fait de la rotation terrestre ayant eu lieu pendant le cycle considéré. Les incréments normés fi et fi_ret déterminés pour la centrale inertielle 1 sont censés être respectivement identiques à ceux déterminés pour la centrale inertielle 2 à l'exception de l'influence des bras de levier résultant de la différence de position entre les deux centrales inertielles 1 et 2. Pour éviter leur influence, les bras de leviers sont corrigés préalablement de façon classique.

La somme v_somme et la différence v_diff des deux incréments normés fi et fi_ret sont calculées. Les vecteurs a et b sont les vecteurs obtenus en normant la somme et la différence (figure 4).

Il est ensuite déterminé par concaténation une matrice [3x3] Ti. Les trois colonnes de la matrice Ti sont le vecteur a, le vecteur b, et leur produit vectoriel a^b (figure 5).

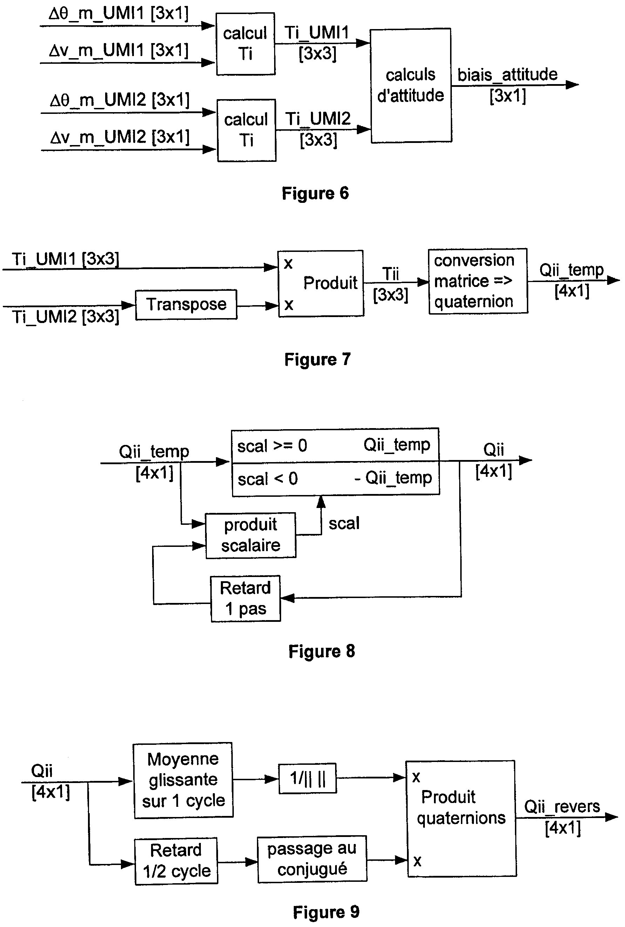

Toutes les opérations décrites jusqu'à présent sont appliquées à chacune des deux centrales inertielles, ce qui permet de produire deux matrices Ti_UMI1 et Ti_UMI2 dont le calcul est complètement indépendant (figure 6). Toutefois, la durée de cycle utilisée dans le calcul doit être la même. Sur cette figure, les incréments de vitesse $\Delta v\_m\_UMI1$, $\Delta v\_m\_UMI2$ sont fournis respectivement par les accéléromètres de chaque centrale inertielle 1, 2 et les incréments angulaires $\Delta \theta\_m\_UMI1$, $\Delta \theta\_m\_UMI2$ sont fournis respectivement par les gyroscopes de chaque centrale inertielle 1, 2.

Les matrices Ti_UMI1 et Ti_UMI2 servent de base à des calculs d'attitude permettant de déterminer des biais d'attitude notés biais_attitude sur la figure 6. Ces calculs de biais d'attitude sont explicités en référence aux figures 7 à 10.

Il est ensuite calculé la matrice de rotation Tii assurant le passage de la matrice Ti_UMI1 à la matrice Ti_UMI2. La matrice Tii est une matrice [3x3] obtenue en multipliant la matrice Ti_UMI1 par la transposée de la matrice Ti_UMI2. On en déduit le quaternion Qii_temp (figure 7). Les algorithmes de transformation d'une matrice [3x3] en quaternion [4x1] sont du domaine public.

Le quaternion Qii (voir la figure 8) s'obtient simplement en mettant le signe de Qii_temp en cohérence avec le résultat scal du produit scalaire du quaternion Qii_temp et du quaternion Qii du pas de temps précédent. Le quaternion Qii représente une valeur instantanée (on parle ici d'instantanée par opposition à une valeur moyenne mentionnée plus loin et obtenue sur un temps d'intégration plus long).

Qii rentre alors dans une file de mémoire comprenant les valeurs sur une durée d'un cycle (figure 9).

Deux quaternions intermédiaires sont calculés. Le premier quaternion intermédiaire est la moyenne glissante sur un cycle de Qii (moyenne composante par composante) qui est ensuite normée (pour que le résultat soit un quaternion unitaire, donc un quaternion de rotation). Le premier quaternion intermédiaire représente donc une valeur moyenne. Le second quaternion intermédiaire est le conjugué du quaternion Qii, retardé d'un demicycle. Le produit Qii_revers des deux quaternions intermédiaire résulte de la multiplication des deux quaternions intermédiaires. Le produit Qii_revers représente ainsi les écarts de la matrice de rotation instantanée par rapport à une matrice de rotation moyenne.

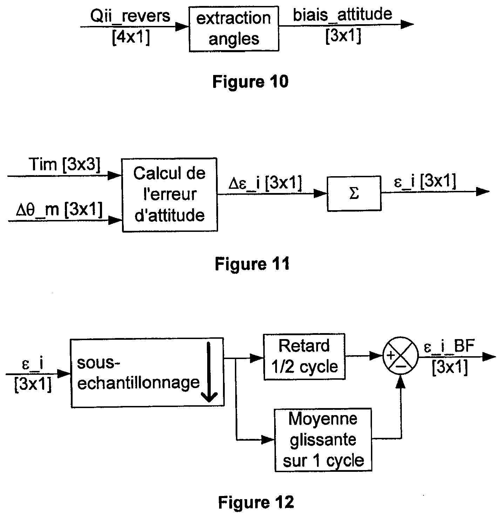

Les angles de biais d'attitude biais_attitude s'obtiennent en faisant l'extraction du vecteur de rotation à partir de Qii_revers (figure 10). Différentes méthodes (celles employant l'hypothèse des petits angles donnent des calculs très simples) permettent d'inverser la formule :

$$Q = \left[ \cos\left(\frac{\|\vec{B}\|}{2}\right) \quad \frac{\vec{B}}{\|\vec{B}\|}\sin\left(\frac{\|\vec{B}\|}{2}\right) \right],$$

$\vec{B}$ étant le vecteur composé des trois angles de biais d'attitude.

Parallèlement, La matrice Tim et les incréments $\Delta\theta\_m$ sont utilisés pour calculer, pour chaque terme d'erreur du modèle, une estimation des erreurs (prédites) d'attitude $\varepsilon\_i$ qu'il génère (figure 11).

Ces erreurs prédites $\varepsilon\_i$ sont sous-échantillonnées, puis les valeurs basse fréquence sont d'une part moyennées (moyenne glissante sur un cycle) et d'autre part retardées avant de soustraire les valeurs basses fréquence moyennées aux valeurs basse fréquence retardées (figure 12). On calcule ainsi un « écart à la moyenne » $\varepsilon\_i\_BF$, en phase avec le biais d'attitude biais_attitude calculé par la chaîne de la figure 10.

Selon un découpage temporel déterminé à l'avance (fixé en fonction des excitations auxquelles on soumet une des centrales inertielles), les biais d'attitude tout comme les erreurs prédites sont rentrés dans une pile mémoire pour permettre l'identification d'un modèle en fonction de e_i_BF visant à compenser les biais d'attitude.

Le procédé de l'invention suppose que les erreurs accélérométriques sont préalablement corrigés par un modèle accélérométrique. Il est également réalisé une mesure des erreurs gyrométriques relatives. Cette mesure est réalisée grâce aux variations d'attitude ou par exemple par rapport à un modèle gyroscopique connu ou en effectuant des sollicitations cycliques d'une des centrales (par exemple un retournement). Il serait également possible de mesurer les différences d'attitude en utilisant des moyens dédiés comme des codeurs d'angles, une caméra, des moyens optiques...

Bien entendu, l'invention n'est pas limitée aux modes de réalisation décrits mais englobe toute variante entrant dans le champ de l'invention telle que définie par les revendications.

## Revendications

1. Procédé de comparaison de deux centrales inertielles qui sont solidaires d'un porteur en des positions écartées l'une de l'autre et qui comportent chacune trois capteurs de mesure angulaire et trois capteurs accélérométriques montés selon les axes d'un repère de mesure propre à chaque centrale inertielle, le procédé comprenant les étapes de :

   - sur une durée prédéterminée, mesurer une force spécifique et des rotations respectivement avec les capteurs accélérométriques et les capteurs angulaires de chaque centrale inertielle,
   - corriger un effet de bras de levier pour ramener les repères à une même origine,
   - reconstituer un repère inertiel de chaque centrale inertielle à partir de la force spécifique et des rotations ainsi mesurées,
   - comparer les repères inertiels pour déterminer un écart entre eux, la comparaison des deux repères inertiels étant effectuée pour déterminer une matrice de rotation instantanée entre les repères inertiels,

   **caractérisé en ce qu'**il comprend en outre les étapes de :

   - déterminer des biais d'attitude et des erreurs d'attitude à partir d'écarts entre la matrice de rotation instantanée et une matrice de rotation moyenne, et
   - introduire les biais et les erreurs d'attitude dans un modèle visant à compenser les écarts d'attitude.

2. Procédé selon la revendication 1, dans lequel la reconstitution est réalisée en calculant un signal correspondant au produit des incréments de vitesse utilisés pour la détermination de la force spécifique et de la matrice de rotation instantanée, ce signal subissant ensuite un filtrage passe-bas et un sous-échantillonnage respectant le critère de Shannon.

3. Procédé selon la revendication 1, dans lequel la durée prédéterminée est sensiblement égale à la période d'excitation d'erreur de celle des centrales inertielles présentant une fiabilité la plus basse à court terme.

4. Procédé selon la revendication 3, dans lequel l'une des centrales inertielles étant une centrale inertielle à retournement, la durée est au moins égale à la durée d'un cycle complet de retournements.

5. Procédé selon la revendication 3, dans lequel la durée est au moins de l'ordre d'une demi-heure.

## Patentansprüche

1. Verfahren zum Vergleich zweier Inertialmesseinheiten, die an zueinander beabstandeten Positionen fest mit einem Träger verbunden sind und die jeweils drei Winkelmesssensoren und drei Beschleunigungssensoren umfassen, die gemäß den Achsen eines Messbezugssystems angebracht sind, das jeder Inertialmesseinheit zu eigen ist, wobei das Verfahren die Schritte umfasst:

   - Messen einer spezifischen Kraft und von Drehungen mit den Beschleunigungssensoren bzw. den Winkelsensoren jeder Inertialmesseinheit über eine vorgegebene Zeitdauer,
   - Korrigieren eines Hebelarmeffekts, um die Bezugssysteme auf einen selben Ursprung zu bringen,
   - Rekonstruieren eines inertialen Bezugssystems jeder Inertialmesseinheit anhand der spezifischen Kraft und der Drehungen, die so gemessen werden,
   - Vergleichen der inertialen Bezugssysteme, um eine Abweichung zwischen denselben zu bestimmen, wobei der Vergleich von zwei inertialen Bezugssystemen durchgeführt wird, um eine Instantan-Drehmatrix zwischen den inertialen Bezugssystemen zu bestimmen,

   **dadurch gekennzeichnet, dass** es ferner die Schritte umfasst:

   - Bestimmen der Lageabweichung und der Lagefehler anhand der Abweichungen zwischen der Instantan-Drehmatrix und einer mittleren Drehmatrix, und
   - Eintragen der Abweichungen und der Lagefehler in ein Modell, das darauf gerichtet ist, die Lageabweichungen zu kompensieren.

2. Verfahren nach Anspruch 1, wobei die Rekonstruktion dadurch erfolgt, dass ein Signal berechnet wird, das dem Produkt der Geschwindigkeitszunahmen, die für die Bestimmung der spezifischen Kraft verwendet werden, und der Instantan-Drehmatrix entspricht, wobei dieses Signal dann einer Tiefpassfilterung und einer Unterabtastung unterzogen wird, die das Shannon-Kriterium beachtet.

3. Verfahren nach Anspruch 1, wobei die vorgegebene Zeitdauer im Wesentlichen gleich der Fehleranregungsperiode derjenigen der Inertialmesseinheiten ist, die die niedrigste Kurzzeit-Zuverlässigkeit aufweist.

4. Verfahren nach Anspruch 3, wobei eine der Inertialmesseinheiten eine Umkehr-Inertialmesseinheit ist, wobei die Zeitdauer mindestens gleich der Zeitdauer eines vollständigen Umkehrzyklus ist.

5. Verfahren nach Anspruch 3, wobei die Zeitdauer mindestens in der Größenordnung einer halben Stunde ist.

## Claims

1. A method for comparing two inertial guidance systems which are integral with a carrier in positions that are separated from one another and which each comprise three angular measurement sensors and three accelerometric sensors mounted along the axes of a measurement reference frame specific to each inertial guidance system, the method comprising the steps for:

   - over a pre-determined period of time, measuring a specific force and rotations respectively with the accelerometric sensors and the angular sensors of each inertial guidance system,
   - correcting for a cantilever effect in order to bring the reference frames to the same origin,
   - reconstructing an inertial reference frame for each inertial guidance system using the specific force and rotations thus measured,
   - comparing the inertial reference frames in order to determine a separation between them, the comparison of the two inertial reference frames being carried out in order to determine an instantaneous rotation matrix between the inertial reference frames,

   **characterized in that** it further includes the steps of :

   - determining biases in attitude and errors in attitude are determined based on differences between the instantaneous rotation matrix and a average rotation matrix, and,
   - introducing the biases and the errors in attitude into a model aiming to compensate the differences in attitude.

2. The method as claimed in claim 1, in which the reconstruction is carried out by calculating a signal corresponding to the product of the increments in speed used for the determination of the specific force and of the instantaneous rotation matrix, this signal being subsequently subjected to a low-pass filtering and an under-sampling complying with the Shannon criterion.

3. The method as claimed in claim 1, in which the pre-determined period is substantially equal to the error excitation period of that of the inertial guidance systems exhibiting the lowest short-term reliability.

4. The method as claimed in claim 3, in which, one of the inertial guidance systems being a rollover inertial guidance system, the period is equal to at least the duration of one full rollover cycle.

5. The method as claimed in claim 3, in which the period is of the order of at least a half-hour.

Δθ_m [3x1] → **intégration** → Tim [3x3] → x **Projection** → Δv_i [3x1]

Δv_m [3x1] → x

**Figure 1**

Δv_i [3x1] → **filtrage passe-bas** → **sous-echantillonnage** ↓ → Δv_i_BF [3x1]

**Figure 2**

Δv_i_BF [3x1] → **1/‖ ‖ (division par la norme)** → fi [3x1]

→ **Retard 1 cycle** → fi_ret [3x1]

**Figure 3**

fi [3x1] → +

→ +  → v_somme [3x1] → 1/‖ ‖ → a [3x1]

→ +  → v_diff [3x1] → 1/‖ ‖ → b [3x1]

fi_ret [3x1] → −

**Figure 4**

a [3x1]

→ **Concatène** → Ti [3x3]

b [3x1] → **Produit vectoriel** → a^b [3x1]

**Figure 5**

Δθ_m_UMI1 [3x1]

Δv_m_UMI1 [3x1]

calcul Ti

Ti_UMI1 [3x3]

Δθ_m_UMI2 [3x1]

Δv_m_UMI2 [3x1]

calcul Ti

Ti_UMI2 [3x3]

calculs d'attitude

biais_attitude [3x1]

**Figure 6**

Ti_UMI1 [3x3]

Ti_UMI2 [3x3]

Transpose

x Produit x

Tii [3x3]

conversion matrice => quaternion

Qii_temp [4x1]

**Figure 7**

Qii_temp [4x1]

| scal >= 0 | Qii_temp |
| scal < 0 | - Qii_temp |

Qii [4x1]

produit scalaire

scal

Retard 1 pas

**Figure 8**

Qii [4x1]

Moyenne glissante sur 1 cycle

1/|| ||

x Produit quaternions x

Qii_revers [4x1]

Retard 1/2 cycle

passage au conjugué

**Figure 9**

8

Qii_revers → extraction angles → biais_attitude
[4x1]                            [3x1]

**Figure 10**

Tim [3x3] → Calcul de l'erreur d'attitude → Δε_i [3x1] → Σ → ε_i [3x1]
Δθ_m [3x1] →

**Figure 11**

ε_i [3x1] → sous-echantillonnage → Retard 1/2 cycle → ⊕(+/−) → ε_i_BF [3x1]
→ Moyenne glissante sur 1 cycle →

**Figure 12**

**Figure 13**

**EP 2 938 965 B1**

## RÉFÉRENCES CITÉES DANS LA DESCRIPTION

### Documents brevets cités dans la description

- EP 2192385 A1